# EUROPEAN PATENT APPLICATION

(11) **EP 4 788 029 A1**
(43) Date of publication of application: **05.08.2026**
(21) Application number: 24870623.6
(22) Date of filing: 20.09.2024
(51) Int. Cl.: H04W 72/51

(54) **COMMUNICATION METHOD AND APPARATUS, AND TERMINAL**

(30) Priority: 25.09.2023 CN 202311248283
(71) Applicant: Vivo Mobile Communication Co., Ltd., Dongguan, Guangdong 523863 (CN)
(72) Inventor: ZHONG, Tingting, Dongguan, Guangdong 523863 (CN); CHEN, Li, Dongguan, Guangdong 523863 (CN); BAO, Wei, Dongguan, Guangdong 523863 (CN)
(74) Representative: Shieldmark
(86) International application number: PCT/CN2024/120116
(87) International publication number: WO 2025/067079

(57) **Abstract**

The present application discloses a communication method and apparatus, and a terminal in the technical field of communication. The communication method according to embodiments of the present application includes: performing, by a terminal according to terminal capability, a random access procedure; and performing communication transmission based on a communication link established by the random access procedure.

## Description

### CROSS-REFERENCE TO RELATED APPLICATIONS

This application claims priority to Chinese Patent Application No. 202311248283.7, entitled "COMMUNICATION METHOD AND APPARATUS, AND TERMINAL", filed with the China National Intellectual Property Administration on September 25, 2023, which is incorporated herein by reference in its entirety.

### TECHNICAL FIELD

The present application relates to the technical field of communication, and in particular, to a communication method and apparatus, and a terminal.

### BACKGROUND

In a mobile communication system, when a terminal device needs to transmit uplink data, it is required to perform a 4-step (4-Step) or 2-step (2-Step) random access procedure to achieve uplink timing synchronization, that is, to acquire uplink timing advance (Timing Advance, TA) information from the network side. Upon achieving uplink synchronization, the terminal device can transmit uplink data via dynamic scheduling or semistatic scheduling.

However, in the related art, when performing the random access procedure based on network-side configured random access resources, random access types, and the like, random access procedure failures and other issues may still occur, affecting communication quality.

### SUMMARY

Embodiments of the present application provide a communication method and apparatus, and a terminal, which can enhance the success rate of random access and ensure communication quality.

In a first aspect, there is provided a communication method, including: performing, by a terminal according to terminal capability, a random access procedure; and performing communication transmission based on a communication link established by the random access procedure.

In a second aspect, there is provided a communication apparatus, including: an execution module, configured to perform, according to terminal capability, a random access procedure; and a communication module, configured to perform communication transmission based on a communication link established by the random access procedure.

In a third aspect, there is provided a terminal, including a processor and a memory, the memory storing programs or instructions executable by the processor, and the programs or the instructions, when executed by the processor, implementing steps of the method according to the first aspect.

In a fourth aspect, there is provided a terminal, including a processor and a communication interface, the communication interface being coupled to the processor, and the processor being configured to execute programs or instructions to implement steps of the method according to the first aspect.

In a fifth aspect, there is provided a readable storage medium having programs or instructions stored therein, the programs or instructions, when executed by a processor, implementing steps of the method according to the first aspect.

In a sixth aspect, there is provided a wireless communication system including a terminal and a network-side device, the terminal being configured to perform steps of the method according to the first aspect.

In a seventh aspect, there is provided a chip including a processor and a communication interface, the communication interface being coupled to the processor, and the processor being configured to execute programs or instructions to implement steps of the method according to the first aspect.

In an eighth aspect, there is provided a computer program/program product stored in a storage medium, the computer program/program product being executed by at least one processor to implement steps of the method according to the first aspect.

In the embodiments of the present application, the terminal performs the random access procedure according to the terminal capability, that is, the terminal capability is fully considered during the random access procedure, such that the random access procedure is matched with the terminal capability of the terminal, thereby enhancing the success rate of random access and ensuring communication quality.

### BRIEF DESCRIPTION OF THE DRAWINGS

FIG. 1 is a schematic structural diagram of a wireless communication system according to an exemplary embodiment of the present application;
FIG. 2 is a first schematic flow diagram of a communication method according to an exemplary embodiment of the present application;
FIG. 3 is a second schematic flow diagram of a communication method according to an exemplary embodiment of the present application;
FIG. 4 is a third schematic flow diagram of a communication method according to an exemplary embodiment of the present application;
FIG. 5 is a fourth schematic flow diagram of a communication method according to an exemplary embodiment of the present application;
FIG. 6 is a schematic structural diagram of a communication apparatus according to an exemplary embodiment of the present application;
FIG. 7 is a schematic structural diagram of a communication device according to an exemplary embodiment of the present application; and
FIG. 8 is a schematic structural diagram of a terminal according to an exemplary embodiment of the present application.

### DETAILED DESCRIPTION

Technical solutions in embodiments of the present application are clearly described below with reference to the drawings in the embodiments of the present application. It is apparent that the described embodiments are merely part of rather than all of the embodiments of the present application. All other embodiments obtained by a person of ordinary skill in the art based on the embodiments of the present application fall within the scope of protection of the present application.

The terms "first" and "second" in the present application are used to distinguish similar objects and are not intended to describe any specific order or sequence. It is to be understood that such terms used herein are interchangeable as appropriate, so that the embodiments of the present application can be implemented in sequences other than those illustrated or described herein. The objects distinguished by "first" and "second" are generally of the same type and are not limited in number, for example, a first object may be one or more. In addition, the term "or" in the present application denotes at least one of the connected objects. For example, "A or B" encompasses three scenarios: scenario one: including A but not B; scenario two: including B but not A; and scenario three: including both A and B. The character "/" generally indicates an "or" relationship between the associated objects.

The term "indication" in the present application may refer to either a direct indication (i.e., an explicit indication) or an indirect indication (i.e., an implicit indication). The direct indication can be understood as a sender explicitly informing a receiver of specific information, operations to be performed, requested results, or the like in the transmitted indication. The indirect indication can be understood as the receiver determining, according to the indication transmitted by the sender, the corresponding information, or making a determination and determining, according to the determination, the operations to be performed or the requested results.

It is to be noted that the technology described in the embodiments of the present application is not limited to a long term evolution (Long Term Evolution, LTE)/LTE-advanced (LTE-Advanced, LTE-A) system, and may be further applied to other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or other systems. The terms "system" and "network" in the embodiments of the present application are often used interchangeably. The described technology can be applied not only to the systems and radio technologies described above, but also to other systems and radio technologies. The following description illustrates a new radio (New Radio, NR) system for exemplary purposes, and NR terminology is used in most of the subsequent description. However, these technologies may be applied to systems other than NR systems, such as 6^{th} generation (6^{th} Generation, 6G) communication systems.

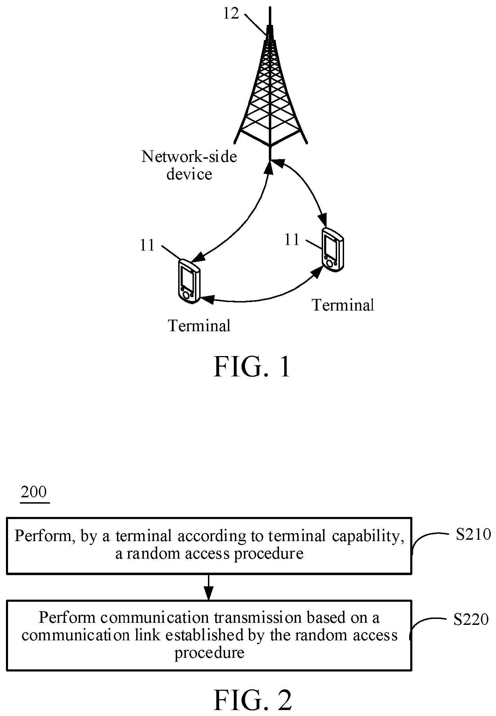

FIG. 1 shows a block diagram of a wireless communication system that can be applied to an embodiment of the present application. The wireless communication system includes a terminal 11 and a network-side device 12. The terminal 11 may be a terminal-side device, such as a mobile phone, tablet personal computer (Tablet Personal Computer), laptop computer (Laptop Computer), notebook computer, personal digital assistant (Personal Digital Assistant, PDA), handheld computer, netbook, ultra-mobile personal computer (Ultra-mobile Personal Computer, UMPC), mobile Internet device (Mobile Internet Device, MID), augmented reality (Augmented Reality, AR) device, virtual reality (Virtual Reality, VR) device, robot, wearable device (Wearable Device), flight vehicle (Flight Vehicle), vehicle user equipment (Vehicle User Equipment, VUE), shipborne device, pedestrian user equipment (Pedestrian User Equipment, PUE), smart home device (home device with wireless communication capabilities, such as a refrigerator, television, washing machine, or furniture), game console, personal computer (Personal Computer, PC), automated teller machine, or selfservice terminal. The wearable devices include smart watches, smart wristbands, smart earphones, smart glasses, smart jewelry (such as smart bracelets, smart bangles, smart rings, smart necklaces, smart ankle bracelets, and smart anklets), smart armbands, smart clothing, and the like. The vehicle user equipment may be referred to as a vehicle terminal, vehicle controller, vehicle module, vehicle component, vehicle chip, vehicle unit, or the like. It is to be noted that the embodiments of the present application do not limit the specific type of the terminal 11. The network-side device 12 may include an access network device or a core network device, where the access network device may be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as node B (Node B, NB), evolved node B (Evolved Node B, eNB), the next generation node B (the Next Generation Node B, gNB), new radio node B (New Radio Node B, NR Node B), access point, relay base station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home node B (Home Node B, HNB), home evolved node B (Home Evolved Node B), transmission reception point (Transmission Reception Point, TRP), or any other suitable term in the field, provided the same technical effect is achieved. The base station is not limited to a specific technical term. It is to be noted that, in the embodiments of the present application, the base station in an NR system is used merely as an example for illustration, and the specific type of the base station is not limited.

The technical solutions according to the embodiments of the present application are described in detail below through some embodiments and application scenarios thereof with reference to the drawings.

As shown in FIG. 2, a schematic flow diagram of a communication method 200 according to an exemplary embodiment of the present application is illustrated. The method 200 may be, but is not limited to, performed by a terminal, and may be specifically performed by hardware or software mounted in the terminal. In this embodiment, the method 200 may include at least the following steps.

S210: A terminal performs a random access procedure according to terminal capability.

When the terminal performs the random access procedure according to the terminal capability, it may, but is not limited to, perform one or more of the following: determining, according to the terminal capability, whether a random access resource set (resource set) is available, selecting, based on feature priority, one random access resource set from multiple available random access resource sets, determining the type of the random access procedure, and determining whether random access resources corresponding to a preamble group B are available, such that one or more of the random access resource set, the random access type, and the random access resources corresponding to the preamble group B involved in the random access procedure are matched with the terminal capability of the terminal, thereby enhancing the success rate of the random access procedure and ensuring communication quality.

Optionally, the terminal capability may include random access resources that the terminal can support, such as the bandwidth of a physical uplink shared channel (Physical Uplink Shared Channel, PUSCH) resource supported by the terminal, random access timing, and preambles (Preamble), which is not limited herein.

It is to be noted that, as one possible implementation, when the terminal performs the random access procedure according to the terminal capability, in addition to determining whether a random access resource set is available, selecting, based on feature priority, one random access resource set from multiple available random access resource sets, determining the type of the random access procedure, and determining whether random access resources corresponding to a preamble group B are available, the terminal may further perform one or more of the following: flushing (Flush) data cached based on a first message or a second message, setting initial values of parameters associated with a random access procedure (e.g., setting an initial value of a preamble transmission counter to 1), performing carrier selection, and selecting a bandwidth part (Bandwidth Part, BWP) on the carrier, to ensure smooth execution of the random access procedure.

The first message may be a message associated with a four-step random access procedure, such as message (Msg) 3, and the second message may be a message associated with a two-step random access procedure, such as MsgA, which is not limited herein.

In some implementations, for a random access resource set involved in the foregoing random access procedure, if the network-side device configures a random access resource set for the terminal, the terminal may perform the random access procedure according to the terminal capability and without using a random access resource set; alternatively, the terminal may perform the random access procedure according to the terminal capability and using the random access resource set, thereby ensuring flexibility of the random access procedure.

S220: Perform communication transmission based on a communication link established by the random access procedure.

There may be various manners for performing communication transmission based on a communication link established by the random access procedure. For example, the terminal may transmit a preamble based on the communication link established by the random access procedure, or may transmit data via a PUSCH corresponding to the communication link established by the random access procedure, which is not limited herein.

In this embodiment, the terminal performs the random access procedure according to the terminal capability, such that the random access procedure is matched with the terminal capability of the terminal, thereby enhancing the success rate of random access and ensuring communication quality.

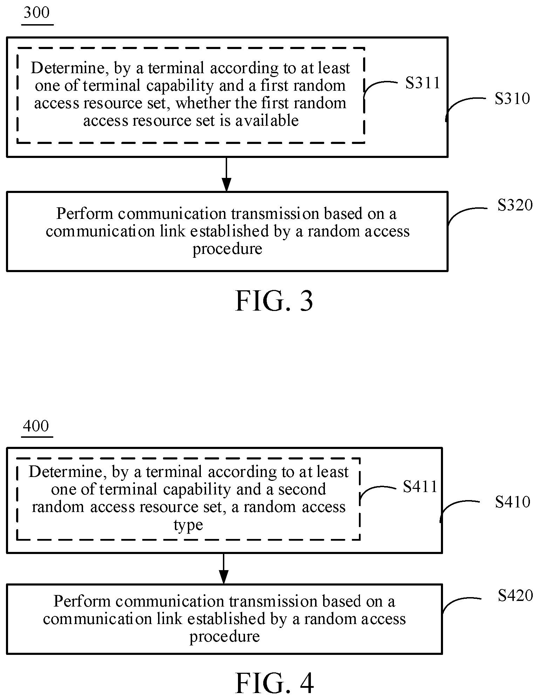

As shown in FIG. 3, a schematic flow diagram of a communication method 300 according to an exemplary embodiment of the present application is illustrated. The method 300 may be, but is not limited to, performed by a terminal, and may be specifically performed by hardware or software mounted in the terminal. In this embodiment, the method 300 may include at least the following steps.

S310: A terminal performs a random access procedure according to terminal capability.

S320: Perform communication transmission based on a communication link established by the random access procedure.

It can be understood that the implementation processes of S310 to S320 may refer to the related description of the foregoing method embodiment 200, and can achieve the same or equivalent technical effects. Certainly, in addition to referring to the related description of the foregoing method embodiment 200, in some implementations, with continued reference to FIG. 3, the terminal performs the random access procedure according to the terminal capability, which may include step S311, as described below.

S311: The terminal determines whether the first random access resource set is available according to at least one of the terminal capability and the first random access resource set.

The first random access resource set may be, but is not limited to, a random access resource set on a first BWP, the first BWP being a BWP selected by the terminal when performing the random access procedure according to the terminal capability, such as a legacy initial (legacy initial) BWP or an active (active) BWP. It can be understood that one or more first random access resource sets may be configured on the first BWP.

Based on this, there may be various manners in which the terminal determines whether the first random access resource set is available according to at least one of the terminal capability and the first random access resource set. For example, the terminal may determine whether the first random access resource set is available according to whether the first random access resource set exceeds the terminal capability.

Considering differences in the resources included in the first random access resource set, such as whether the first random access resource set includes 2-step random access resources or 4-step random access resources, the manner in which the terminal determines whether the first random access resource set is available according to whether the first random access resource set exceeds the terminal capability may include, but is not limited to, at least one of the following Manner 1 to Manner 3.

Manner 1: In a case that the first random access resource set includes 2-step random access resources and does not include 4-step random access resources, and part or all of the 2-step random access resources exceed the terminal capability, the terminal determines that the first random access resource set is an unavailable random access resource set.

For example, assume that the first random access resource set includes 2-step random access resources, and that the 2-step random access resources include resource 1, resource 2, resource 3, resource 4, and resource 5. If some or all of resource 1, resource 2, resource 3, resource 4, and resource 5 exceed the terminal capability, the terminal may determine that the first random access resource set is unavailable.

Manner 2: In a case that the first random access resource set includes 2-step random access resources and 4-step random access resources, part or all of the 2-step random access resources exceed the terminal capability, and all features (feature) applicable to the first random access resource set are a subset or a superset of all features of the random access procedure performed by the terminal, the terminal determines that the first random access resource set is an available random access resource set.

The features in Manner 2 may include, but are not limited to, one or more of small data transmission (Small Data Transmission, SDT), reduced capability (Reduced Capability, RedCap), coverage enhancement (CovEnh), and slicing (Slicing).

The "all features applicable to the first random access resource set" in Manner 2 can be understood as indicating that the first random access resource set is a resource set allocated by the network side for a random access procedure associated with features such as SDT, RedCap, CovEnh, and slicing. Similarly, "all features of the random access procedure performed by the terminal" can be understood as the features associated with the random access procedure performed by the terminal, such as one or more of the features SDT, RedCap, CovEnh, and slicing associated with the initiated random access procedure.

In this case, the "all features applicable to the first random access resource set are a subset or a superset of all features of the random access procedure performed by the terminal" in Manner 2 can be understood as follows: assuming that all features of the random access procedure performed by the terminal are {SDT, RedCap, CovEnh, Slicing}, then, as a subset or a superset of {SDT, RedCap, CovEnh, Slicing}, all features applicable to the first random access resource set may be {SDT, RedCap, CovEnh, Slicing}, {SDT, RedCap, Slicing}, {SDT, Slicing}, {SDT, RedCap}, {RedCap}, and the like.

Manner 3: In a case that the first random access resource set includes 2-step random access resources, part of the 2-step random access resources exceed the terminal capability, and all features applicable to the first random access resource set are a subset or a superset of all features of the random access procedure performed by the terminal, the terminal determines that the first random access resource set is an available random access resource set.

Similarly, as in Manner 2, the features in Manner 3 may include, but are not limited to, one or more of SDT, RedCap, CovEnh, and slicing.

In addition, with respect to the "all features applicable to the first random access resource set are a subset or a superset of all features of the random access procedure performed by the terminal" involved in Manner 3, it can be understood as follows: assuming that all features of the random access procedure performed by the terminal are {SDT, RedCap, CovEnh, Slicing}, then, as a subset or a superset of {SDT, RedCap, CovEnh, Slicing}, all features applicable to the first random access resource set may be {SDT, RedCap, CovEnh, Slicing}, {SDT, RedCap, Slicing}, {SDT, Slicing}, {SDT, RedCap}, {RedCap}, and the like.

It is to be noted that, in some embodiments, considering that one or more first random access resource sets may be configured on the first BWP, if there is one available first random access resource set, the terminal may directly perform the random access procedure based on the available first random access resource set; and if there are multiple available first random access resource sets, the terminal may select one from the multiple available first random access resource sets to perform the random access procedure. The manner in which the terminal selects one from the multiple available first random access resource sets is to select a random access resource set based on feature priority.

Certainly, if the terminal determines that all first random access resource sets configured on the first BWP are unavailable, that is, no available random access resource set is configured on the first BWP, the terminal may reselect a BWP, for example, selecting, from a carrier corresponding to the first BWP, a second BWP different from the first BWP, and then determining whether random access resources configured on the second BWP are available using the foregoing Manner 1 to Manner 3.

In some embodiments, when the first terminal is an enhanced reduced capability (eRedCap) UE, the terminal, when performing the random access procedure according to the terminal capability, may further perform at least one of the following Operation 1 to Operation 3.

Operation 1, in a case that the terminal determines that a random access resource set having a first feature is available, the terminal determines, when selecting a random access resource set based on feature priority, that all features applied to the random access procedure include the first feature, where the first feature is reduced capability (RedCap), and the second feature is enhanced reduced capability. Accordingly, a terminal having a first feature may be referred to as a RedCap UE, and a terminal having a second feature may be referred to as an eRedCap UE.

For example, when the eRedCap UE initiates a random access procedure and all features applied in this random access procedure include eRedCap, and if a random access resource set 1 is a resource set including only the RedCap feature, and the eRedCap UE determines that the random access resource set 1 is available and that there are multiple available random access resource sets (including the random access resource set 1), the eRedCap UE selects one random access resource set from the multiple available sets based on the feature priority. During this process, the eRedCap UE determines that all features applied to the random access procedure include RedCap.

Operation 2, in a case that the terminal determines that a random access resource set having a first feature is available and the network side configures a random access resource set having a second feature, the terminal determines, when selecting a random access resource set based on feature priority, that the random access resource set having the first feature is a resource of the second feature, and applies feature priority of the second feature to the first feature.

For example, when the eRedCap UE initiates a random access procedure and all features applied in this random access procedure include eRedCap, and if a random access resource set 1 is a resource set including only the RedCap feature, and the eRedCap UE determines that the random access resource set 1 is available and that the network configures a random access resource set corresponding to the eRedCap, then if the eRedCap UE determines that there are multiple available random access resource sets (including the random access resource set 1), it selects one random access resource set from the multiple available sets based on the feature priority. During this process, the eRedCap UE determines that the random access resource set 1 is the resource of the eRedCap and applies the feature priority of the eRedCap to the RedCap.

Operation 3, in a case that the terminal determines that a random access resource set having a first feature is available and the network side does not configure a random access resource set having a second feature, the terminal determines, when selecting a random access resource set based on feature priority, that the random access resource set having the first feature is a resource of the second feature, and applying feature priority of the first feature to the first feature, where the terminal is an enhanced reduced capability terminal, the first feature is reduced capability, and the second feature is enhanced reduced capability.

For example, when the eRedCap UE initiates a random access procedure and all features applied in this random access procedure include eRedCap, and if a random access resource set 1 is a resource set including only the feature of the RedCap, and the eRedCap UE determines that the random access resource set 1 is available and that the network does not configures a random access resource set corresponding to the eRedCap, then if the eRedCap UE determines that there are multiple available random access resource sets (including the random access resource set 1), it selects one random access resource set from the multiple available sets based on the feature priority. During this process, the eRedCap UE determines that the random access resource set is the resource of the eRedCap and applies the feature priority of the RedCap to the RedCap.

In this embodiment, during the random access procedure, the terminal determines whether a random access resource set is available according to at least one of the terminal capability and the random access resource set. Therefore, this can avoid the problem of random access failure caused by the random access resource exceeding the terminal capability, thereby ensuring communication quality. In particular, in a case that the first random access resource set includes only 2-step random access resources, and part or all of the 2-step random access resources exceed the terminal capability, the terminal can avoid the problem in the related art where, if only 2-step random access resources are configured on a BWP, and the 2-step random access resources exceed the terminal capability, the terminal is unable to perform 2-step random access and cannot fall back to 4-step random access, leading to random access failure, by determining whether the first random access resource set is available. This effectively ensures communication quality.

As shown in FIG. 4, a schematic flow diagram of a communication method 400 according to an exemplary embodiment of the present application is illustrated. The method 400 may be, but is not limited to, performed by a terminal, and may be specifically performed by hardware or software mounted in the terminal. In this embodiment, the method 400 may include at least the following steps.

S410: A terminal performs a random access procedure according to terminal capability.

S420: Perform communication transmission based on a communication link established by the random access procedure.

It can be understood that the implementation processes of S410 to S420 may refer to the related description of the foregoing method embodiment 200 or 300, and can achieve the same or equivalent technical effects. Certainly, in addition to referring to the related description of the foregoing method embodiment 200 or 300, in some implementations, with continued reference to FIG. 4, the terminal performs the random access procedure according to the terminal capability, which may further include S411 as shown in FIG. 4, as described below.

S411: The terminal determines a type of random access procedure according to at least one of the terminal capability and a second random access resource set.

The random access type may include at least one of 2-step random access and 4-step random access.

The second random access resource set is a random access resource set on the first BWP, such as an available random access resource set on the first BWP. In some embodiments, if the terminal, before determining the random access type, first determines whether a random access resource set is available according to Manner 1 to Manner 3 described in the method embodiment 300, the second random access resource set may be a random access resource set selected by the terminal from at least one available first random access resource set. The related description regarding the first random access resource set can refer to the description in the foregoing method embodiment 300, which is not repeated herein.

In some embodiments, according to a difference in resources included in the second random access resource set, the manner in which the terminal determines a random access type according to at least one of the terminal capability and a second random access resource set may include at least one of the following Manner 1 to Manner 5.

Manner 1: In a case that the second random access resource set includes 2-step random access resources and 4-step random access resources, and part or all of the 2-step random access resources exceed the terminal capability, the terminal determines the random access type as the 4-step random access.

Through the implementation of Manner 1, the problem in the related art can be avoided where, when 2-step random access resources and 4-step random access resources are simultaneously configured on a BWP, the downlink pathloss (pathloss) reference signal received power (reference signal received power, RSRP) of the 2-step random access resources exceeds a preset threshold, such as msgA-RSRP-Threshold, yet the 2-step random access resources exceed the terminal capability. This can avoid the terminal from being unable to perform random access based on 2-step random access, which results in random access failure.

Manner 2: In a case that the second random access resource set includes 2-step random access resources and 4-step random access resources, part or all of the 2-step random access resources do not exceed the terminal capability, and a downlink pathloss reference signal received power is greater than a predetermined value, the terminal determines the random access type as the 2-step random access.

The predetermined value may be implemented by protocol agreement, higherlayer configuration, or terminal determination. In this embodiment, the predetermined value is related to the received power of MsgA.

It can be understood that, through the implementation of Manner 2, in a case that 2-step random access resources and 4-step random access resources are simultaneously configured on a BWP, determining the random access type based on the terminal capability and the downlink pathloss reference signal received power RSRP of the 2-step random access resources can enhance the success rate of random access.

Manner 3: In a case that the second random access resource set includes 2-step random access resources and does not include 4-step random access resources, and part or all of the 2-step random access resources do not exceed the terminal capability, the terminal determines the random access type as the 2-step random access.

Through the implementation of Manner 3, the random access type can be matched with the terminal capability, thereby enhancing the success rate of random access.

Manner 4: In a case that the second random access resource set includes 2-step random access resources and does not include 4-step random access resources, and part of the 2-step random access resources exceed the terminal capability, the terminal determines the random access type as the 2-step random access.

Through the implementation of Manner 3, the terminal can continue to use 2-step random access instead of selecting 4-step random access, thereby enhancing the performance of the random access procedure.

Manner 5: In a case that the second random access resource set includes 2-step random access resources and does not include 4-step random access resources, and all of the 2-step random access resources exceed the terminal capability, the terminal determines the random access type as the 4-step random access.

Through the implementation of Manner 4, the terminal can select 4-step random access instead of 2-step random access, avoiding the problem where the terminal selects 2-step random access only to find that all 2-step random access resources exceed the terminal capability, leading to random access procedure failure.

It is to be noted that, in a case that the second random access resource set includes 2-step random access resources and does not include 4-step random access resources, and the determined random access type is the 4-step random access, the determined random access type does not match the second random access resources. Therefore, to ensure the reliability of the random access procedure, in some embodiments, the terminal, when performing the random access procedure according to the terminal capability, may further perform at least one of the following Operation 1 and Operation 2.

Operation 1: The terminal discards the second random access resource set, and re-performs, based on at least one of the terminal capability and a third random access resource set, at least one of determination of the random access type, selection of an available random access resource set, and selection of a random access resource set from the available random access resource sets.

The third random access resource set is a random access resource set on the first BWP other than the second random access resource set. Optionally, there may be various determination manners of the third random access resource set, which is not limited herein.

For example, assume that five random access resource sets are configured on the first BWP, i.e., resource set 1, resource set 2, resource set 3, resource set 4, and resource set 5. If the terminal determines that three of the five resource sets are available, for example, resource set 1, resource set 2, and resource set 4, the second random access resource set is one of the three random access resource sets, such as resource set 1. Next, if the resource set 1 includes 2-step random access resources and does not include 4-step random access resources, and the determined random access type is 4-step random access, the third random access resource set may be one random access resource set of the three available random access resource sets other than the second random access resource set, resource set 1, such as resource set 2 or resource set 4.

Certainly, if the third random access resource set is the resource set 2, and the resource set 2 also includes 2-step random access resources and does not include 4-step random access resources, and the random access type determined by the terminal is 4-step random access, the terminal may then select the resource set 4 from the three available random access resource sets other than the second random access resource set, resource set 1, and the third random access resource set, resource set 2, to determine the random access type. Therefore, by performing a single determination of whether a random access resource set is available and subsequently determining the random access type based on the selected available resource set, potentially multiple times, the efficiency of random access type determination can be enhanced.

For another example, assume that five random access resource sets are configured on the first BWP, i.e., resource set 1, resource set 2, resource set 3, resource set 4, and resource set 5. If the terminal determines that three of the five resource sets are available, for example, resource set 1, resource set 2, and resource set 4, the second random access resource set may be one of the three random access resource sets, such as resource set 1. Next, if the resource set 1 includes 2-step random access resources and does not include 4-step random access resources, and the determined random access type is 4-step random access, the terminal may re-determine an available random access resource set from other random access resource sets in the five random access resource sets other than the resource set 2. For example, the terminal re-determines available random access resource sets, resource set 3 and resource set 4, from random access resource sets resource set 1, resource set 3, resource set 4, and resource set 5. In this case, the third random access resource set may be the resource set 3 or the resource set 4.

Certainly, if the third random access resource set may be the resource set 3, and the resource set 3 also includes 2-step random access resources and does not include 4-step random access resources, and the determined random access type is 4-step random access, the terminal may re-determine an available random access resource set from the five random access resource sets other than the second random access resource set, resource set 1, and the third random access resource set, resource set 3. For example, the terminal re-determines the resource set 4 as being available from the resource set 2, resource set 4, and resource set 5. The terminal can then determine the random access type based on the resource set 4. Therefore, by performing multiple real-time determinations of random access resource availability, the determination of the random access type can be closely matched with the terminal capability, thereby enhancing the reliability of random access type determination.

In addition, for re-performing, based on at least one of the terminal capability and the third random access resource set, determination of the random access type, selection of an available random access resource set, and selection from the available random access resource sets, the implementation processes may refer to the foregoing related implementation processes based on the second random access resource set, and can achieve the same or equivalent technical effects. To avoid repetition, detailed descriptions are omitted herein.

Operation 2: The terminal discards the second random access resource set, and, in a case that no third random access resource set exists, the terminal reselects a second BWP different from the first BWP, and re-performs, based on at least one of the terminal capability and a random access resource set configured on the second BWP, at least one of selection of an available random access resource set, selection of a random access resource set from the available random access resource sets, and determination of the random access type.

The third random access resource set is a random access resource set on the first BWP other than the second random access resource set. It can be understood that the determination manner of the third random access resource set in Operation 2 is similar to the determination manner of the third random access resource set in Operation 1, which is not repeated herein.

That is, for Operation 2, in a case that no available random access resource set exists on the first BWP for determining the random access type, the terminal may reselect a BWP, such as a second BWP, and then determine the random access type based on the random access resource sets configured on the re-selected second BWP.

Optionally, the first BWP and the second BWP may be on the same carrier or on different carriers, which is not limited herein.

Certainly, based on at least one of the terminal capability and a random access resource set configured on the second BWP, the selection of available random access resource sets, the selection of a random access resource set from the available sets, the determination of the random access type, and the like may be re-performed. The implementation process is the same as the implementation process based on the first BWP, and can achieve the same or equivalent technical effects. To avoid repetition, detailed descriptions are omitted herein.

In this embodiment, during the random access procedure, the terminal determines the random access type according to at least one of the terminal capability and the random access resource set, avoiding the problem of random access failures caused by a mismatch between the random access type and the terminal capability, and ensuring communication quality.

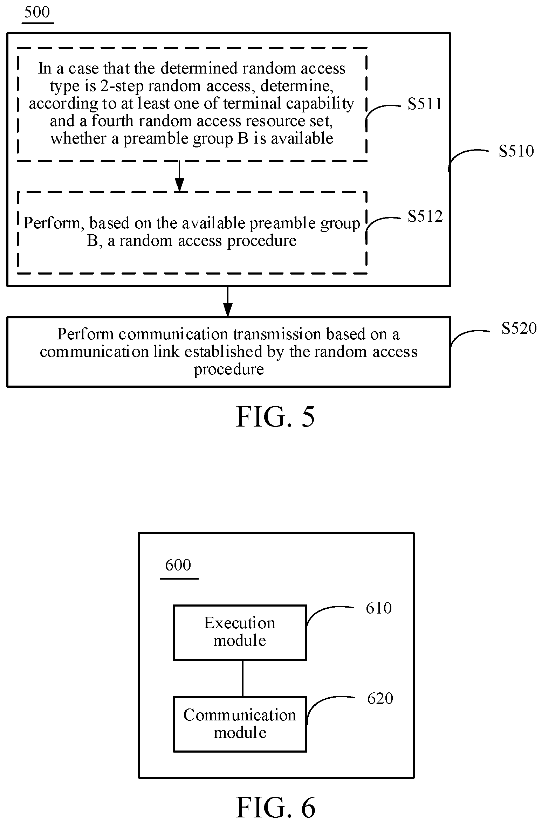

As shown in FIG. 5, a schematic flow diagram of a communication method 500 according to an exemplary embodiment of the present application is illustrated. The method 500 may be, but is not limited to, performed by a terminal, and may be specifically performed by hardware or software mounted in the terminal. In this embodiment, the method 500 may include at least the following steps.

S510: A terminal performs a random access procedure according to terminal capability.

S520: Perform communication transmission based on a communication link established by the random access procedure.

It can be understood that the implementation processes of S510 to S520 may refer to the related description of the foregoing method embodiment 200, 300, or 400, and can achieve the same or equivalent technical effects. Certainly, in addition to referring to the related description of the foregoing method embodiment 200, 300, or 400, in some implementations, with continued reference to FIG. 4, the terminal performs the random access procedure according to the terminal capability, which may include S521 as shown in FIG. 5, as described below.

S511: In a case that the determined random access type is a 2-step random access, determine, according to at least one of the terminal capability and a fourth random access resource set, whether a preamble group B is available.

It can be understood that, in this embodiment, the random access type may be determined based on the random access type determination manner provided in the foregoing method embodiment 400, or may be determined based on conventional methods provided in the related art, which is not limited herein.

Certainly, if the random access type can be determined based on the random access type determination manner provided in the foregoing method embodiment 400, the fourth random access resource set may include the second random access resource set, such that the two may be identical.

In some embodiments, the manner of determining, according to at least one of the terminal capability and a fourth random access resource set, a preamble group B may include, but is not limited to, at least one of the following Manner 1 and Manner 2.

Manner 1, in a case that random access resources corresponding to the preamble group B exceed the terminal capability, the terminal determines that the preamble group B is unavailable, that is, the terminal does not select the preamble group B for random access. The random access resources corresponding to the preamble group B belong to the fourth random access resource set.

Manner 2, in a case that random access resources corresponding to the preamble group B do not exceed the terminal capability and a first condition for selecting the preamble group B is satisfied, the terminal determines that the preamble group B is available, that is, the terminal may select the preamble group B for random access, where the random access resources corresponding to the preamble group B belong to the fourth random access resource set.

The first condition includes at least one of the following Condition 1 and Condition 2.

Condition 1: The potential or candidate MsgA payload size (including the uplink data available for transmission and the MAC subheader, and, if needed, a media access control control element (Media Access Control Control Element, MAC CE)) exceeds the length of preamble group A corresponding to the random access MsgA (ra MSGA SizeGroupA), and the path loss is less than a first threshold. The first threshold is implemented by protocol agreement or the like, which is not limited herein.

Condition 2: The random access procedure is initiated for the common control channel (Common Control Channel, CCCH), and the size of the CCCH service data unit (Service Data Unit, SDU) plus the MAC subheader exceeds the ra MSGA SizeGroupA.

S512: Perform, based on the available preamble group B, the random access procedure.

In this embodiment, when the terminal performs the random access procedure based on the preamble group B, the implementation of Manner 1 and Manner 2 enables the preamble group used in the random access procedure to be matched with the terminal capability, thereby enhancing the success rate of the random access procedure and ensuring communication quality.

Based on the descriptions of the foregoing method embodiment 200 to method embodiment 500, for ease of understanding, the communication method provided in the present application is illustratively described below with reference to Example 1 to Example 3.

### Example 1

Assuming that the random access procedure is triggered, the terminal may perform, but is not limited to, the following steps, as described below.

Step 1: The terminal flushes data cached based on Msg3 and flushes data cached based on MsgA.

Step 2: The terminal sets initial values of parameters associated with a random access procedure.

Step 3: Perform carrier selection.

Step 4: Select a first BWP based on the selected carrier, multiple first random access resource sets being configured on the first BWP.

Step 5: The terminal selects a random access resource set.

Optionally, the manner in which the terminal selects a random access resource set may include any one of the following 11) or 12).

11) The terminal determines whether the first random access resource set is available according to at least one of the terminal capability and the first random access resource set. When one available first random access resource set is determined, the subsequent random access procedure may be performed based on the first random access resource set; or, when multiple available first random access resource sets are determined, one random access resource set may be selected from the multiple available first random access resource sets to perform the subsequent random access procedure.

Additionally, it can be understood that the implementation processes of 11) may refer to the related description of the foregoing method embodiment 300, and can achieve the same or equivalent technical effects. To avoid repetition, limitations are omitted herein.

12) The terminal selects a random access resource set according to a conventional selection manner used in the related art. The conventional selection manner may include, but is not limited to, selecting a random access resource set based on the feature priority applicable to the random access resource set. The features may include, but are not limited to, SDT, RedCap, CovEnh, and Slicing.

Certainly, if the terminal fails to select an available random access resource set on the first BWP, it may revert to step 4 and reselect a BWP based on the selected carrier.

Step 6: The terminal selects a random access type.

Optionally, the manner in which the terminal selects a random access type may include any one of the following 21) or 22).

21) The terminal determines a random access type according to at least one of the terminal capability and a second random access resource set. The second random access resource set may be determined based on any one of the random access resource set selection manners provided in step 5, which is not limited herein.

Additionally, it can be understood that the implementation processes of 21) may refer to the related description of the foregoing method embodiment 400, and can achieve the same or equivalent technical effects. To avoid repetition, limitations are omitted herein.

22) The terminal selects a random access type according to a conventional selection manner used in the related art. The conventional selection manner may include, but is not limited to, the following: for example, if the selected random access resource set includes 2-step resources and 4-step resources, and a downlink pathloss reference signal received power is greater than *msgA-RSRP-Threshold*, the random access type is 2-step random access; if the selected random access resource set includes only 2-step random access resources, the random access type is 2-step random access.

Certainly, if the random access type determined by the terminal based on the second random access resource set does not meet the random access requirements, the terminal may reselect an available random access resource set on the first BWP; or, if no available random access resource set exists on the BWP, the terminal may revert to step 4 and reselect a BWP based on the selected carrier, such as selecting a second BWP different from the first BWP, and then re-perform step 5 and step 6 based on the random access resource sets configured on the second BWP.

Step 7: Select a preamble group B.

Optionally, when the terminal selects the preamble group B, in a case that the random access type determined in step 6 is 2-step random access, the terminal may determine whether the preamble group B is available according to any one of the following 31) and 32).

31) The terminal may determine whether the preamble group B is available according to at least one of the terminal capability and a fourth random access resource set, and perform the subsequent steps of the random access procedure based on the available preamble group B.

The fourth random access resource set may be the random access resource set used by the terminal during the determination of the random access type.

Additionally, the implementation process where the terminal determines whether the preamble group B is available according to at least one of the terminal capability and a fourth random access resource set may refer to the related description of the foregoing method embodiment 500, and can achieve the same or equivalent technical effects. To avoid repetition, limitations are omitted herein.

32) The terminal determines whether the preamble group B is available according to a conventional selection manner used in the related art. The conventional selection manner may involve selecting the preamble group B for random access when the preamble group B is configured and when either of the following Condition 1 or Condition 2 is satisfied.

Condition 1: The potential or candidate MsgA payload size (including the uplink data available for transmission and the MAC subheader, and, if needed, a MAC CE) exceeds the length of preamble group A corresponding to the random access MsgA (ra MSGA SizeGroupA), and the path loss is less than a first threshold. The first threshold is implemented by protocol agreement or the like, which is not limited herein.

Condition 2: The random access procedure is initiated for the CCCH, and the size of the CCCH SDU plus the MAC subheader exceeds the ra MSGA SizeGroupA.

It is to be noted that, if the terminal determines that there is no available preamble group, the terminal may revert to step 5 and redetermine the random access type.

It is to be noted that the other related actions of the terminal during the random access procedure are not repeated in this embodiment. Additionally, the random access procedure in the communication method provided in Example 1 may include, but is not limited to, the foregoing step 1 to step 7. For example, it may include more or fewer steps than those described above, which is not limited herein.

### Example 2

Assuming that the random access resource set and the random access type in the random access procedure are optimized in Example 2, when the random access procedure is triggered, the terminal performs the following steps.

Step 1: Flush data cached based on Msg3 or MsgA.

Step 2: Set initial values of parameters associated with a random access procedure, such as setting the initial values of some variables.

Step 3: Perform carrier selection.

Step 4: Select a BWP based on the carrier, such as the first BWP described in the present application.

Step 5: Select a random access resource set based on a random access resource set configured on the BWP.

When selecting the random access resource set, the method for determining whether the "random access resource set" is available may include at least one of the following 41) to 45).
41) If a random access resource set only includes 2-step random access resources, and all resources (such as the bandwidth of PUSCH resources) within the 2-step random access resource set exceed the terminal capability, the terminal determines that the random access resource set is unavailable.
42) If a random access resource set only includes 2-step random access resources, and part of the resources (such as the bandwidth of PUSCH resources) within the 2-step random access resource set exceed the terminal capability, the terminal determines that the random access resource set is unavailable.
43) If a random access resource set includes 2-step random access resources and 4-step random access resources, and all resources (such as the bandwidth of PUSCH resources) within the 2-step random access resources exceed the terminal capability, and all features applicable to the random access resource set are a subset or a superset of all features of the terminal initiating this random access procedure, the terminal determines that the random access resource set is available.
44) If a random access resource set includes only 2-step random access resources, and part of the resources within the 2-step random access resources exceed the terminal capability, and all features applicable to the random access resource set are a subset or a superset of all features of the terminal initiating this random access procedure, the terminal determines that the random access resource set is available.
45) If a random access resource set includes 2-step random access resources and 4-step random access resources, and part of the resources within the 2-step random access resources exceed the terminal capability, and all features applicable to the random access resource set are a subset or a superset of all features of the terminal initiating this random access procedure, the terminal determines that the random access resource set is available.

Step 6: Select a random access type of a random access procedure.

The method for selecting a random access type of a random access procedure may include at least one of the following 51) to 54).
51) If the random access resource set selected in step 5 includes 2-step random access resources and 4-step random access resources, and all resources (e.g., PUSCH resources) within the 2-step random access resources exceed the terminal capability, the terminal selects the 4-step random access type.
52) If the random access resource set selected in step 5 includes 2-step random access resources, and part or all of the resources (e.g., PUSCH resources) within the 2-step random access resources do not exceed the terminal capability, the terminal selects the 2-step random access type.
53) If the random access resource set selected in step 5 includes 2-step random access resources and 4-step random access resources, and part or all of the resources (e.g., PUSCH resources) within the 2-step random access resources do not exceed the terminal capability, the terminal selects the 2-step random access type.
54) If the available random access resource set selected in step 5 includes 2-step random access resources and 4-step random access resources, and part of the resources (e.g., PUSCH resources) within the 2-step random access resources exceed the terminal capability, the terminal selects the 4-step random access type.

Step 7: If the random access type selected in step 6 is 2-step random access, the terminal performs random access resource selection of 2-step random access.

The "random access resource selection of 2-step random access" includes at least one of the following.
61) If the preamble group B is configured, and random access resources corresponding to the preamble group B exceed the terminal capability, the terminal cannot select the preamble group B.
62) If the preamble group B is configured, and random access resources corresponding to the preamble group B do not exceed the terminal capability, the terminal selects the preamble group B when conditions for the preamble group B are satisfied. The conditions for the preamble group B being satisfied can be understood as the foregoing first condition or second condition.

It is to be noted that the steps following step 7 are part of the existing process and are not further elaborated.

Additionally, the random access procedure in the communication method provided in Example 2 may include, but is not limited to, the foregoing step 1 to step 7. For example, it may include more or fewer steps than those described above, which is not limited herein.

### Example 3

Assuming that the selection of the random access type in the random access procedure is optimized in Example 2, when the random access procedure is triggered, the terminal performs the following steps.

Step 1: Flush data cached based on Msg3 or MsgA.

Step 2: Set initial values of parameters associated with a random access procedure, such as setting the initial values of some variables.

Step 3: Perform carrier selection.

Step 4: Select a BWP, such as the first BWP described in the present application.

Step 5: Select a random access resource set.

Step 6: Select a random access type of a random access procedure.

The "selecting a random access type of a random access procedure" includes at least one of the following 61) to 64).
61) If the random access resource set selected in step 5 includes only 2-step random access resources, and all resources within the 2-step random access resources exceed the terminal capability, the terminal selects the 4-step random access type.
62) If the random access resource set selected in step 5 includes 2-step random access resources and 4-step random access resources, and all or part of the resources (e.g., PUSCH resources) within the 2-step random access resources exceed the terminal capability, the terminal selects the 4-step random access type.
63) If the random access resource set selected in step 5 includes 2-step random access resources and 4-step random access resources, and part of the resources within the 2-step random access resources exceed the terminal capability, and the downlink pathloss reference signal received power is greater than the msgA-RSRP-Threshold, the terminal selects the 2-step random access type.
64) If the random access resource set selected in step 5 includes only 2-step random access resources, and part of the resources within the 2-step random access resources exceed the terminal capability, the terminal selects the 2-step random access type.

Step 7a: If step 6 corresponds to the scenario described in 61) "If the random access resource set selected in step 5 includes only 2-step random access resources, and all resources within the 2-step random access resources exceed the terminal capability, the terminal selects the 4-step random access type", the terminal jumps (or referred to as reverts) to step 5 to restart, and flushes, in step 5, all the random access resource sets previously selected in step 5. If the optional random access resource set in step 5 is empty (i.e., no available random access resource set), then the process jumps to step 4 to restart, and flushes in step 4, all the BWPs previously selected in step 4, and reselects the BWP, such as the second BWP mentioned earlier in the present application.

Step 7b: If step 6 corresponds to the scenario described in 62) "If the random access resource set selected in step 5 includes 2-step random access resources and 4-step random access resources, and all or part of the resources within the 2-step random access resources exceed the terminal capability, the terminal selects the 4-step random access type", the terminal performs random access resource selection of 4-step random access, the specific method of which follows the existing protocol and is not further elaborated here. The steps following step 7b are part of the existing protocol process and are not further elaborated here.

Step 7c: If step 6 corresponds to the scenario described in 63) "If the random access resource set selected in step 5 includes 2-step random access resources and 4-step random access resources, and part of the resources within the 2-step random access resources exceed the terminal capability, and the downlink pathloss reference signal received power is greater than the msgA-RSRP-Threshold, the terminal selects the 2-step random access type", the terminal performs random access resource selection of 2-step random access.

The "random access resource selection of 2-step random access" includes: the terminal performing the random access resource selection of 2-step random access. If the preamble group B is configured, and random access resources corresponding to the preamble group B exceed the terminal capability, the terminal cannot select the preamble group B. Alternatively, if the preamble group B is configured, and random access resources corresponding to the preamble group B do not exceed the terminal capability, the terminal selects the preamble group B when conditions for the preamble group B are satisfied. The subsequent steps are part of the existing protocol process and are not further elaborated here. The "conditions for the preamble group B being satisfied" can be understood as the foregoing first condition or second condition.

Step 7d: If step 6 corresponds to the scenario described in 64) "If the random access resource set selected in step 5 includes only 2-step random access resources, and part of the resources within the 2-step random access resources exceed the terminal capability, the terminal selects the 2-step random access type".

The "random access resource selection of 2-step random access" includes: the terminal performing the random access resource selection of 2-step random access. If the preamble group B is configured, and random access resources corresponding to the preamble group B exceed the terminal capability, the terminal cannot select the preamble group B. Alternatively, if the preamble group B is configured, and random access resources corresponding to the preamble group B do not exceed the terminal capability, the terminal selects the preamble group B when conditions for the preamble group B are satisfied. The subsequent steps are part of the existing protocol process and are not further elaborated here. The "conditions for the preamble group B being satisfied" can be understood as the foregoing first condition or second condition.

It is to be noted that the steps following step 7a to 7d are part of the existing process and are not further elaborated.

Additionally, the random access procedure in the communication method provided in Example 3 may include, but is not limited to, the foregoing step 1 to step 7. For example, it may include more or fewer steps than those described above, which is not limited herein.

The communication method according to the embodiments of the present application may be performed by a communication apparatus. In the embodiments of the present application, the communication apparatus according to the embodiments of the present application is illustrated in an example where the communication apparatus performs the communication method.

As shown in FIG. 6, a schematic structural diagram of a communication apparatus 600 according to an embodiment of the present application is illustrated. The apparatus 600 includes: an execution module 610, configured to perform, according to terminal capability, a random access procedure; and a communication module 620, configured to perform communication transmission based on a communication link established by the random access procedure.

Optionally, the performing, by the execution module 610 according to terminal capability, a random access procedure includes: selecting a first bandwidth part BWP.

Optionally, the performing, by the execution module 610 according to terminal capability, a random access procedure includes: performing, according to the terminal capability and without using a random access resource set, the random access procedure; or performing, according to the terminal capability and using the random access resource set, the random access procedure.

Optionally, the random access resource set includes a first random access resource set, and the performing, by the execution module 610 according to terminal capability, a random access procedure includes: determining, according to at least one of the terminal capability and the first random access resource set, whether the first random access resource set is available, where the first random access resource set is a random access resource set on the first BWP.

Optionally, the determining, by the execution module 610 according to at least one of the terminal capability and the first random access resource set, whether the first random access resource set is available includes: determining, according to whether the first random access resource set exceeds the terminal capability, whether the first random access resource set is available.

Optionally, the determining, by the execution module 610 according to whether the first random access resource set exceeds the terminal capability, whether the first random access resource set is available includes at least one of the following: in a case that the first random access resource set includes 2-step random access resources and does not include 4-step random access resources, and part or all of the 2-step random access resources exceed the terminal capability, determining that the first random access resource set is an unavailable random access resource set; in a case that the first random access resource set includes 2-step random access resources and 4-step random access resources, part or all of the 2-step random access resources exceed the terminal capability, and all features applicable to the first random access resource set are a subset or a superset of all features of the random access procedure performed by the terminal, determining that the first random access resource set is an available random access resource set; and in a case that the first random access resource set includes 2-step random access resources, part of the 2-step random access resources exceed the terminal capability, and all features applicable to the first random access resource set are a subset or a superset of all features of the random access procedure performed by the terminal, determining that the first random access resource set is an available random access resource set.

Optionally, the performing, by the execution module 610 according to terminal capability, a random access procedure includes: determining, according to at least one of the terminal capability and a second random access resource set, a random access type, where the second random access resource set is a random access resource set on the first BWP, and the random access type includes at least one of 2-step random access and 4-step random access.

Optionally, the second random access resource set is a random access resource set selected from at least one available first random access resource set.

Optionally, the determining, by the execution module 610 according to at least one of the terminal capability and a second random access resource set, a random access type includes at least one of the following: in a case that the second random access resource set includes 2-step random access resources and 4-step random access resources, and part or all of the 2-step random access resources exceed the terminal capability, determining the random access type as the 4-step random access; in a case that the second random access resource set includes 2-step random access resources and 4-step random access resources, part or all of the 2-step random access resources do not exceed the terminal capability, and a downlink pathloss reference signal received power is greater than a predetermined value, determining the random access type as the 2-step random access; in a case that the second random access resource set includes 2-step random access resources and does not include 4-step random access resources, and part or all of the 2-step random access resources do not exceed the terminal capability, determining the random access type as the 2-step random access; in a case that the second random access resource set includes 2-step random access resources and does not include 4-step random access resources, and part of the 2-step random access resources exceed the terminal capability, determining the random access type as the 2-step random access; and in a case that the second random access resource set includes 2-step random access resources and does not include 4-step random access resources, and all of the 2-step random access resources exceed the terminal capability, determining the random access type as the 4-step random access.

Optionally, in a case that the second random access resource set includes 2-step random access resources and does not include 4-step random access resources, and the determined random access type is the 4-step random access, the performing, by the execution module 610 according to terminal capability, a random access procedure further includes at least one of the following: discarding the second random access resource set, and re-performing, based on at least one of the terminal capability and a third random access resource set, at least one of determination of the random access type, selection of an available random access resource set, and selection of a random access resource set from the available random access resource sets; and discarding the second random access resource set, and, in a case that no third random access resource set exists, reselecting, by the terminal, a second BWP different from the first BWP, and re-performing, based on at least one of the terminal capability and a random access resource set configured on the second BWP, at least one of selection of an available random access resource set, selection of a random access resource set from the available random access resource sets, and determination of the random access type, where the third random access resource set is a random access resource set on the first BWP other than the second random access resource set.

Optionally, the performing, by the execution module 610 according to terminal capability, a random access procedure includes: in a case that the determined random access type is 2-step random access, determining, according to at least one of the terminal capability and a fourth random access resource set, whether a preamble group B is available; and performing, based on the available preamble group B, the random access procedure.

Optionally, the determining, according to at least one of the terminal capability and a fourth random access resource set, a preamble group B includes at least one of the following: in a case that random access resources corresponding to the preamble group B exceed the terminal capability, determining that the preamble group B is unavailable; and in a case that random access resources corresponding to the preamble group B do not exceed the terminal capability and a first condition for selecting the preamble group B is satisfied, determining that the preamble group B is available, where the random access resources corresponding to the preamble group B belong to the fourth random access resource set.

Optionally, the fourth random access resource set includes the second random access resource set.

Optionally, the performing, by the communication module 620, communication transmission based on a communication link established by the random access procedure includes: performing, by the terminal based on the communication link established by the random access procedure, at least one of the following: transmitting a preamble; and transmitting data via a physical uplink shared channel PUSCH corresponding to the communication link established by the random access procedure.

Optionally, the execution module 610 is further configured to perform at least one of the following: flushing data cached based on a first message, the first message being a message associated with a four-step random access procedure; and flushing data cached based on a second message, the second message being a message associated with a two-step random access procedure.

Optionally, the execution module 610 is further configured to set initial values of parameters associated with a random access procedure.

Optionally, the execution module 610 is further configured to perform carrier selection.

Optionally, the execution module 610 is further configured to perform at least one of the following: in a case that the terminal determines that a random access resource set having a first feature is available, determining, by the terminal when selecting a random access resource set based on feature priority, that all features applied to the random access procedure include the first feature; in a case that the terminal determines that a random access resource set having a first feature is available and the network side configures a random access resource set having a second feature, determining, by the terminal when selecting a random access resource set based on feature priority, that the random access resource set having the first feature is a resource of the second feature, and applying feature priority of the second feature to the first feature; and in a case that the terminal determines that a random access resource set having a first feature is available and the network side does not configure a random access resource set having a second feature, determining, by the terminal when selecting a random access resource set based on feature priority, that the random access resource set having the first feature is a resource of the second feature, and applying feature priority of the first feature to the first feature, where the terminal is an enhanced reduced capability terminal, the first feature is reduced capability, and the second feature is enhanced reduced capability.

The communication apparatus in the embodiments of the present application may be an electronic device, for example, an electronic device having an operating system, or a component in an electronic device, such as an integrated circuit or a chip. The electronic device may be a terminal or a non-terminal device. Exemplarily, the terminal may include, but is not limited to, the types of terminal 11 listed above, and other devices may include a server, a network attached storage (Network Attached Storage, NAS), or the like, which are not specifically limited in the embodiments of the present application.

The communication apparatus according to the embodiments of the present application can implement the processes implemented in the method embodiments illustrated in FIGS. 2 to 5, and achieve the same technical effects. To avoid repetition, detailed descriptions are omitted herein.

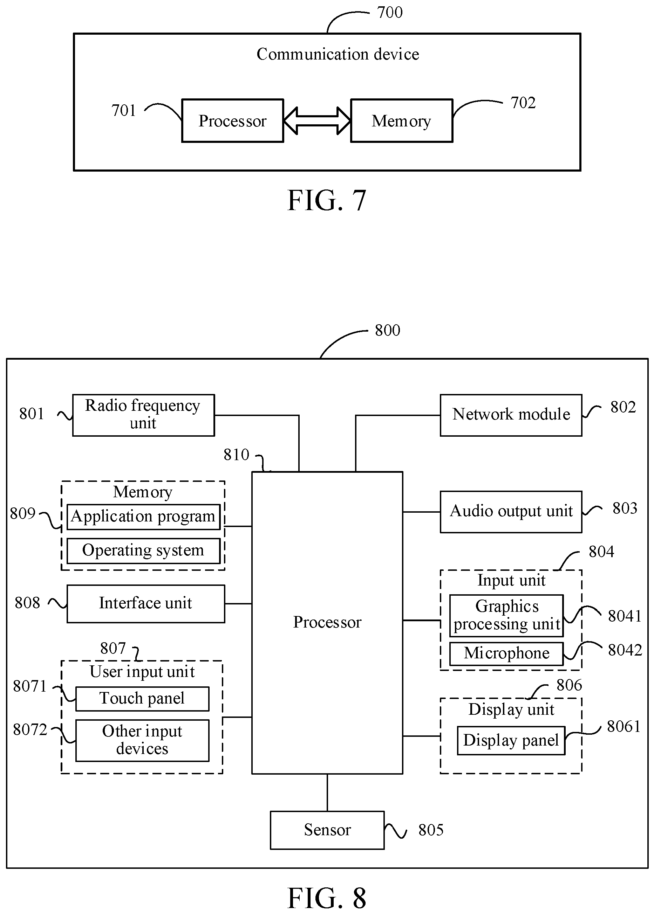

As shown in FIG. 7, the embodiments of the present application further provide a communication device 700, including a processor 701 and a memory 702. The memory 702 has programs or instructions executable by the processor 701 stored therein. For example, when the communication device 700 is a terminal, the programs or instructions, when executed by the processor 701, implement steps of the above communication method embodiments and can achieve the same technical effects. In a case that the communication device 700 is a network-side device, the programs or the instructions, when executed by the processor 701, implement steps of the above communication method embodiments, and can achieve the same technical effects. To avoid repetition, detailed descriptions are omitted herein.

The embodiments of the present application further provide a terminal, including a processor and a communication interface, the communication interface being coupled to the processor, and the processor being configured to execute programs or instructions to implement steps in the method embodiments shown in FIGS. 2 to 5. The terminal embodiment corresponds to the above terminal-side method embodiments. Implementation processes and implementation modes described in the above method embodiments are applicable to this terminal embodiment, and can achieve the same technical effects. In particular, FIG. 8 is a schematic diagram of a hardware structure of a terminal for implementing an embodiment of the present application.

The terminal 800 includes, but is not limited to, at least part of the following components: a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (e.g., a battery) configured to provide power to the components. The power supply can be logically connected to the processor 810 via a power management system, thereby enabling the management of charging, discharging, and power consumption via the power management system. The terminal structure shown in FIG. 8 constitutes no limitation on the terminal. The terminal may include more or fewer components than those illustrated, may combine certain components, or may have different component arrangements, which are not repeated herein.

It is to be understood that, in the embodiments of the present application, the input unit 804 may include a graphics processing unit (Graphics Processing Unit, GPU) 8041 and a microphone 8042. The graphics processing unit 8041 processes image data of static images or videos captured by an image capture apparatus (such as a camera) in video capture mode or image capture mode. The display unit 806 may include a display panel 8061. The display panel 8061 may be configured in the form of a liquid crystal display, an organic light-emitting diode, or the like. The user input unit 807 includes at least one of a touch panel 8071 and other input devices 8072. The touch panel 8 071 is also referred to as a touchscreen. The touch panel 8071 may include two parts: a touch detection apparatus and a touch controller. Other input devices 8072 may include, but are not limited to, a physical keyboard, function keys (e.g., volume control keys, power keys, etc.), a trackball, a mouse, or a joystick, which are not repeated herein.

In the embodiments of the present application, the radio frequency unit 801 may transmit downlink data received from a network-side device to the processor 810 for processing. Additionally, the radio frequency unit 801 may transmit uplink data to the network-side device. Generally, the radio frequency unit 801 includes, but is not limited to, an antenna, an amplifier, a transceiver, a coupler, a low-noise amplifier, and a duplexer.

The memory 809 may be configured to store software programs or instructions, as well as various data. The memory 809 may mainly include a first storage area for storing programs or instructions and a second storage area for storing data. The first storage area may store an operating system, at least one application program or instruction required for a function (such as audio playback, image playback, etc.), and the like. In addition, the memory 809 may include volatile memory or non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or flash memory. Volatile memory may include random access memory (Random Access Memory, RAM), static RAM (Static RAM, SRAM), dynamic RAM (Dynamic RAM, DRAM), synchronous DRAM (Synchronous DRAM, SDRAM), double data rate SDRAM (Double Data Rate SDRAM, DDRSDRAM), enhanced SDRAM (Enhanced SDRAM, ESDRAM), Synch link DRAM (Synch link DRAM, SLDRAM), or Direct Rambus RAM (Direct Rambus RAM, DRRAM). The memory 809 in the embodiments of the present application includes, but is not limited to, the above types of memory and any other suitable types of memory.

The processor 810 may include one or more processing units. Optionally, the processor 810 integrates an application processor and a modem processor. The application processor primarily handles operations related to the operating system, user interface, application programs, and the like. The modem processor primarily handles wireless communication signals, such as a baseband processor. It can be understood that the above modem processor may not be integrated into the processor 810.

The processor 810 is configured to perform, according to terminal capability, a random access procedure. The radio frequency unit 801 is configured to perform communication transmission based on a communication link established by the random access procedure.

Optionally, the performing, by the processor 810 according to terminal capability, a random access procedure includes: selecting a first bandwidth part BWP.

Optionally, the performing, by the processor 810 according to terminal capability, a random access procedure includes: performing, according to the terminal capability and without using a random access resource set, the random access procedure; or performing, according to the terminal capability and using the random access resource set, the random access procedure.

Optionally, the random access resource set includes a first random access resource set, and the performing, by the processor 810 according to terminal capability, a random access procedure includes: determining, according to at least one of the terminal capability and the first random access resource set, whether the first random access resource set is available, where the first random access resource set is a random access resource set on the first BWP.

Optionally, the determining, by the processor 810 according to at least one of the terminal capability and the first random access resource set, whether the first random access resource set is available includes: determining, according to whether the first random access resource set exceeds the terminal capability, whether the first random access resource set is available.

Optionally, the determining, by the processor 810 according to whether the first random access resource set exceeds the terminal capability, whether the first random access resource set is available includes at least one of the following: in a case that the first random access resource set includes 2-step random access resources and does not include 4-step random access resources, and part or all of the 2-step random access resources exceed the terminal capability, determining that the first random access resource set is an unavailable random access resource set; in a case that the first random access resource set includes 2-step random access resources and 4-step random access resources, part or all of the 2-step random access resources exceed the terminal capability, and all features applicable to the first random access resource set are a subset or a superset of all features of the random access procedure performed by the terminal, determining that the first random access resource set is an available random access resource set; and in a case that the first random access resource set includes 2-step random access resources, part of the 2-step random access resources exceed the terminal capability, and all features applicable to the first random access resource set are a subset or a superset of all features of the random access procedure performed by the terminal, determining that the first random access resource set is an available random access resource set.

Optionally, the performing, by the processor 810 according to terminal capability, a random access procedure includes: determining, according to at least one of the terminal capability and a second random access resource set, a random access type, where the second random access resource set is a random access resource set on the first BWP, and the random access type includes at least one of 2-step random access and 4-step random access.

Optionally, the second random access resource set is a random access resource set selected from at least one available first random access resource set.

Optionally, the determining, by the processor 810 according to at least one of the terminal capability and a second random access resource set, a random access type includes at least one of the following: in a case that the second random access resource set includes 2-step random access resources and 4-step random access resources, and part or all of the 2-step random access resources exceed the terminal capability, determining the random access type as the 4-step random access; in a case that the second random access resource set includes 2-step random access resources and 4-step random access resources, part or all of the 2-step random access resources do not exceed the terminal capability, and a downlink pathloss reference signal received power is greater than a predetermined value, determining the random access type as the 2-step random access; in a case that the second random access resource set includes 2-step random access resources and does not include 4-step random access resources, and part or all of the 2-step random access resources do not exceed the terminal capability, determining the random access type as the 2-step random access; in a case that the second random access resource set includes 2-step random access resources and does not include 4-step random access resources, and part of the 2-step random access resources exceed the terminal capability, determining the random access type as the 2-step random access; and in a case that the second random access resource set includes 2-step random access resources and does not include 4-step random access resources, and all of the 2-step random access resources exceed the terminal capability, determining the random access type as the 4-step random access.

Optionally, in a case that the second random access resource set includes 2-step random access resources and does not include 4-step random access resources, and the determined random access type is the 4-step random access, the performing, by the processor 810 according to terminal capability, a random access procedure further includes at least one of the following: discarding the second random access resource set, and re-performing, based on at least one of the terminal capability and a third random access resource set, at least one of determination of the random access type, selection of an available random access resource set, and selection of a random access resource set from the available random access resource sets; and discarding the second random access resource set, and, in a case that no third random access resource set exists, reselecting, by the terminal, a second BWP different from the first BWP, and re-performing, based on at least one of the terminal capability and a random access resource set configured on the second BWP, at least one of selection of an available random access resource set, selection of a random access resource set from the available random access resource sets, and determination of the random access type, where the third random access resource set is a random access resource set on the first BWP other than the second random access resource set.

Optionally, the performing, by the processor 810 according to terminal capability, a random access procedure includes: in a case that the determined random access type is 2-step random access, determining, according to at least one of the terminal capability and a fourth random access resource set, whether a preamble group B is available; and performing, based on the available preamble group B, the random access procedure.

Optionally, the determining, according to at least one of the terminal capability and a fourth random access resource set, a preamble group B includes at least one of the following: in a case that random access resources corresponding to the preamble group B exceed the terminal capability, determining that the preamble group B is unavailable; and in a case that random access resources corresponding to the preamble group B do not exceed the terminal capability and a first condition for selecting the preamble group B is satisfied, determining that the preamble group B is available, where the random access resources corresponding to the preamble group B belong to the fourth random access resource set.

Optionally, the fourth random access resource set includes the second random access resource set.

Optionally, the performing, by the radio frequency unit 801, communication transmission based on a communication link established by the random access procedure includes: performing, by the terminal based on the communication link established by the random access procedure, at least one of the following: transmitting a preamble; and transmitting data via a physical uplink shared channel PUSCH corresponding to the communication link established by the random access procedure.

Optionally, the processor 810 is further configured to perform at least one of the following: flushing data cached based on a first message, the first message being a message associated with a four-step random access procedure; and flushing data cached based on a second message, the second message being a message associated with a two-step random access procedure.

Optionally, the processor 810 is further configured to set initial values of parameters associated with a random access procedure.

Optionally, the processor 810 is further configured to perform carrier selection.

Optionally, the processor 810 is further configured to perform at least one of the following: in a case that the terminal determines that a random access resource set having a first feature is available, determining, by the terminal when selecting a random access resource set based on feature priority, that all features applied to the random access procedure include the first feature; in a case that the terminal determines that a random access resource set having a first feature is available and the network side configures a random access resource set having a second feature, determining, by the terminal when selecting a random access resource set based on feature priority, that the random access resource set having the first feature is a resource of the second feature, and applying feature priority of the second feature to the first feature; and in a case that the terminal determines that a random access resource set having a first feature is available and the network side does not configure a random access resource set having a second feature, determining, by the terminal when selecting a random access resource set based on feature priority, that the random access resource set having the first feature is a resource of the second feature, and applying feature priority of the first feature to the first feature, where the terminal is an enhanced reduced capability terminal, the first feature is reduced capability, and the second feature is enhanced reduced capability.

It can be understood that the implementation processes of the implementations described in this embodiment may refer to the related description of the communication method embodiments 200 to 800, and can achieve the same or equivalent technical effects. To avoid repetition, detailed descriptions are omitted herein.

The embodiments of the present application further provide a readable storage medium. The readable storage medium has programs or instructions stored therein. The programs or instructions, when executed by a processor, implement processes of the above communication method embodiments, and can achieve the same technical effects. To avoid repetition, detailed descriptions are omitted herein.

The processor is a processor of the terminal described in the above embodiments. The readable storage medium includes a computer-readable storage medium, such as a computer read-only memory ROM, a random access memory RAM, a magnetic disk, or an optical disk. In some examples, the readable storage medium may be a non-transitory readable storage medium.

The embodiments of the present application further provide a chip, including a processor and a communication interface. The communication interface is coupled to the processor. The processor is configured to execute programs or instructions to implement processes of the above communication method embodiments, and can achieve the same technical effects. To avoid repetition, detailed descriptions are omitted herein.

It is to be understood that the chip mentioned in the embodiments of the present application may be referred to as a system-on-chip, a system chip, a chip system, or an on-chip system, and the like.

The embodiments of the present application further provide a computer program/program product stored in a storage medium. The computer program/program product is executed by at least one processor to implement processes of the above communication method embodiments, and can achieve the same technical effects. To avoid repetition, detailed descriptions are omitted herein.

The embodiments of the present application further provide a communication system including a terminal and a network-side device. The terminal is configured to perform processes of the above communication method embodiments, and can achieve the same technical effects. To avoid repetition, detailed descriptions are omitted herein.

It is to be noted that, as used herein, the terms "include", "comprise", and any of other variants are intended to encompass non-exclusive inclusion, such that a process, method, article, or apparatus that includes a series of elements not only includes those elements but also may include other elements not explicitly listed, or elements inherent to such a process, method, article, or apparatus. In the absence of further limitations, an element defined by the statement "including one ..." does not exclude the presence of additional identical elements in a process, method, article, or apparatus that includes the element. In addition, it is to be noted that the scope of the method and apparatus in implementations of the present application is not limited to performing functions in the order shown or discussed. Functions may be performed substantially simultaneously or in an order opposite to that described. For example, the method described may be executed in an order different from that illustrated, and various steps may be added, omitted, or combined. Additionally, features described in reference to certain examples may be combined in other examples.

From the description of the above implementations, a person skilled in the art can clearly understand that the methods of the above embodiments can be implemented by a computer software product together with a necessary general-purpose hardware platform, or entirely by hardware. The computer software product is stored in a storage medium (such as ROM, RAM, magnetic disk, optical disk, etc.) and includes multiple instructions configured to cause a terminal or a network-side device to perform the methods described in the embodiments of the present application.

The embodiments of the present application have been described above with reference to the drawings. However, the present application is not limited to the specific implementations described above. The above specific implementations are illustrative rather than restrictive. A person of ordinary skill in the art, in light of the teachings of the present application, may make various modifications and variations without departing from the scope of the spirit of the present application and the claims, all of which are intended to be encompassed within the protection of the present application.

## Claims

1. A communication method, comprising:
performing, by a terminal according to terminal capability, a random access procedure; and
performing communication transmission based on a communication link established by the random access procedure.

2. The method according to claim 1, wherein the performing, by a terminal according to terminal capability, a random access procedure comprises:
selecting, by the terminal, a first bandwidth part BWP.

3. The method according to claim 1 or 2, wherein the performing, by a terminal according to terminal capability, a random access procedure comprises:
performing, by the terminal according to the terminal capability and without using a random access resource set, the random access procedure; or
performing, by the terminal according to the terminal capability and using the random access resource set, the random access procedure.

4. The method according to any one of claims 1 to 3, wherein the random access resource set comprises a first random access resource set, and the performing, by a terminal according to terminal capability, a random access procedure comprises:
determining, by the terminal according to at least one of the terminal capability and the first random access resource set, whether the first random access resource set is available,
wherein the first random access resource set is a random access resource set on the first BWP.

5. The method according to claim 4, wherein the determining, by the terminal according to at least one of the terminal capability and the first random access resource set, whether the first random access resource set is available comprises:
determining, by the terminal according to whether the first random access resource set exceeds the terminal capability, whether the first random access resource set is available.

6. The method according to claim 5, wherein the determining, by the terminal according to whether the first random access resource set exceeds the terminal capability, whether the first random access resource set is available comprises at least one of the following:
in a case that the first random access resource set comprises 2-step random access resources and does not comprise 4-step random access resources, and part or all of the 2-step random access resources exceed the terminal capability, determining, by the terminal, that the first random access resource set is an unavailable random access resource set;
in a case that the first random access resource set comprises 2-step random access resources and 4-step random access resources, part or all of the 2-step random access resources exceed the terminal capability, and all features applicable to the first random access resource set are a subset or a superset of all features of the random access procedure performed by the terminal, determining, by the terminal, that the first random access resource set is an available random access resource set; and
in a case that the first random access resource set comprises 2-step random access resources, part of the 2-step random access resources exceed the terminal capability, and all features applicable to the first random access resource set are a subset or a superset of all features of the random access procedure performed by the terminal, determining, by the terminal, that the first random access resource set is an available random access resource set.

7. The method according to any one of claims 2 to 6, wherein the performing, by a terminal according to terminal capability, a random access procedure comprises:
determining, by the terminal according to at least one of the terminal capability and a second random access resource set, a random access type,
wherein the second random access resource set is a random access resource set on the first BWP, and the random access type comprises at least one of 2-step random access and 4-step random access.

8. The method according to claim 7, wherein the second random access resource set is a random access resource set selected by the terminal from at least one available first random access resource set.

9. The method according to claim 7, wherein the determining, by the terminal according to at least one of the terminal capability and a second random access resource set, a random access type comprises at least one of the following:
in a case that the second random access resource set comprises 2-step random access resources and 4-step random access resources, and part or all of the 2-step random access resources exceed the terminal capability, determining, by the terminal, the random access type as the 4-step random access;
in a case that the second random access resource set comprises 2-step random access resources and 4-step random access resources, part or all of the 2-step random access resources do not exceed the terminal capability, and a downlink pathloss reference signal received power is greater than a predetermined value, determining, by the terminal, the random access type as the 2-step random access;
in a case that the second random access resource set comprises 2-step random access resources and does not comprise 4-step random access resources, and part or all of the 2-step random access resources do not exceed the terminal capability, determining, by the terminal, the random access type as the 2-step random access;
in a case that the second random access resource set comprises 2-step random access resources and does not comprise 4-step random access resources, and part of the 2-step random access resources exceed the terminal capability, determining, by the terminal, the random access type as the 2-step random access; and
in a case that the second random access resource set comprises 2-step random access resources and does not comprise 4-step random access resources, and all of the 2-step random access resources exceed the terminal capability, determining, by the terminal, the random access type as the 4-step random access.

10. The method according to claim 9, wherein, in a case that the second random access resource set comprises 2-step random access resources and does not comprise 4-step random access resources, and the determined random access type is the 4-step random access, the performing, by a terminal according to terminal capability, a random access procedure further comprises at least one of the following:
discarding, by the terminal, the second random access resource set, and re-performing, based on at least one of the terminal capability and a third random access resource set, at least one of determination of the random access type, selection of an available random access resource set, and selection of a random access resource set from the available random access resource sets; and
discarding, by the terminal, the second random access resource set, and, in a case that no third random access resource set exists, reselecting, by the terminal, a second BWP different from the first BWP, and re-performing, based on at least one of the terminal capability and a random access resource set configured on the second BWP, at least one of selection of an available random access resource set, selection of a random access resource set from the available random access resource sets, and determination of the random access type,
wherein the third random access resource set is a random access resource set on the first BWP other than the second random access resource set.

11. The method according to any one of claims 1 to 9, wherein the performing, by a terminal according to terminal capability, a random access procedure comprises:
in a case that the determined random access type is 2-step random access, determining, according to at least one of the terminal capability and a fourth random access resource set, whether a preamble group B is available; and
performing, based on the available preamble group B, the random access procedure.

12. The method according to claim 10, wherein the determining, according to at least one of the terminal capability and a fourth random access resource set, a preamble group B comprises at least one of the following:
in a case that random access resources corresponding to the preamble group B exceed the terminal capability, determining, by the terminal, that the preamble group B is unavailable; and
in a case that random access resources corresponding to the preamble group B do not exceed the terminal capability and a first condition for selecting the preamble group B is satisfied, determining, by the terminal, that the preamble group B is available,
wherein the random access resources corresponding to the preamble group B belong to the fourth random access resource set.

13. The method according to claim 11 or 12, wherein the fourth random access resource set comprises the second random access resource set.

14. The method according to any one of claims 1 to 13, wherein the performing communication transmission based on a communication link established by the random access procedure comprises:
performing, by the terminal based on the communication link established by the random access procedure, at least one of the following:
transmitting a preamble; and
transmitting data via a physical uplink shared channel PUSCH corresponding to the communication link established by the random access procedure.

15. The method according to any one of claims 1 to 14, further comprising at least one of the following:
flushing data cached based on a first message, the first message being a message associated with a four-step random access procedure; and
flushing data cached based on a second message, the second message being a message associated with a two-step random access procedure.

16. The method according to any one of claims 1 to 15, further comprising:
setting, by the terminal, initial values of parameters associated with the random access procedure.

17. The method according to any one of claims 1 to 16, further comprising:
performing carrier selection by the terminal.

18. The method according to claim 1, further comprising at least one of the following:
in a case that the terminal determines that a random access resource set having a first feature is available, determining, by the terminal when selecting a random access resource set based on feature priority, that all features applied to the random access procedure comprise the first feature;
in a case that the terminal determines that a random access resource set having a first feature is available and the network side configures a random access resource set having a second feature, determining, by the terminal when selecting a random access resource set based on feature priority, that the random access resource set having the first feature is a resource of the second feature, and applying feature priority of the second feature to the first feature; and
in a case that the terminal determines that a random access resource set having a first feature is available and the network side does not configure a random access resource set having a second feature, determining, by the terminal when selecting a random access resource set based on feature priority, that the random access resource set having the first feature is a resource of the second feature, and applying feature priority of the first feature to the first feature,
wherein the terminal is an enhanced reduced capability terminal, the first feature is reduced capability, and the second feature is enhanced reduced capability.

19. A communication apparatus, comprising:
an execution module, configured to perform, according to terminal capability, a random access procedure; and
a communication module, configured to perform communication transmission based on a communication link established by the random access procedure.

20. The apparatus according to claim 19, wherein the performing, by the execution module according to terminal capability, a random access procedure comprises:
selecting a first bandwidth part BWP.

21. The apparatus according to claim 19 or 20, wherein the performing, by the execution module according to terminal capability, a random access procedure comprises:
performing, according to the terminal capability and without using a random access resource set, the random access procedure; or
performing, according to the terminal capability and using the random access resource set, the random access procedure.

22. The apparatus according to any one of claims 19 to 21, wherein the random access resource set comprises a first random access resource set, and the performing, by the execution module according to terminal capability, a random access procedure comprises:
determining, according to at least one of the terminal capability and the first random access resource set, whether the first random access resource set is available,
wherein the first random access resource set is a random access resource set on the first BWP.

23. The apparatus according to claim 22, wherein the determining, by the execution module according to at least one of the terminal capability and the first random access resource set, whether the first random access resource set is available comprises:
determining, according to whether the first random access resource set exceeds the terminal capability, whether the first random access resource set is available.

24. The apparatus according to claim 23, wherein the determining, by the execution module according to whether the first random access resource set exceeds the terminal capability, whether the first random access resource set is available comprises at least one of the following:
in a case that the first random access resource set comprises 2-step random access resources and does not comprise 4-step random access resources, and part or all of the 2-step random access resources exceed the terminal capability, determining that the first random access resource set is an unavailable random access resource set;
in a case that the first random access resource set comprises 2-step random access resources and 4-step random access resources, part or all of the 2-step random access resources exceed the terminal capability, and all features applicable to the first random access resource set are a subset or a superset of all features of the random access procedure performed by the terminal, determining that the first random access resource set is an available random access resource set; and
in a case that the first random access resource set comprises 2-step random access resources, part of the 2-step random access resources exceed the terminal capability, and all features applicable to the first random access resource set are a subset or a superset of all features of the random access procedure performed by the terminal, determining that the first random access resource set is an available random access resource set.

25. The apparatus according to any one of claims 19 to 24, wherein the performing, by the execution module according to terminal capability, a random access procedure comprises:
determining, according to at least one of the terminal capability and a second random access resource set, a random access type,
wherein the second random access resource set is a random access resource set on the first BWP, and the random access type comprises at least one of 2-step random access and 4-step random access.

26. The apparatus according to claim 25, wherein the second random access resource set is a random access resource set selected from at least one available first random access resource set.

27. The apparatus according to claim 25, wherein the determining, by the execution module according to at least one of the terminal capability and a second random access resource set, a random access type comprises at least one of the following:
in a case that the second random access resource set comprises 2-step random access resources and 4-step random access resources, and part or all of the 2-step random access resources exceed the terminal capability, determining the random access type as the 4-step random access;
in a case that the second random access resource set comprises 2-step random access resources and 4-step random access resources, part or all of the 2-step random access resources do not exceed the terminal capability, and a downlink pathloss reference signal received power is greater than a predetermined value, determining the random access type as the 2-step random access;
in a case that the second random access resource set comprises 2-step random access resources and does not comprise 4-step random access resources, and part or all of the 2-step random access resources do not exceed the terminal capability, determining the random access type as the 2-step random access;
in a case that the second random access resource set comprises 2-step random access resources and does not comprise 4-step random access resources, and part of the 2-step random access resources exceed the terminal capability, determining the random access type as the 2-step random access; and
in a case that the second random access resource set comprises 2-step random access resources and does not comprise 4-step random access resources, and all of the 2-step random access resources exceed the terminal capability, determining the random access type as the 4-step random access.

28. The apparatus according to claim 27, wherein, in a case that the second random access resource set comprises 2-step random access resources and does not comprise 4-step random access resources, and the determined random access type is the 4-step random access, the performing, by the execution module according to terminal capability, a random access procedure further comprises at least one of the following:
discarding the second random access resource set, and re-performing, based on at least one of the terminal capability and a third random access resource set, at least one of determination of the random access type, selection of an available random access resource set, and selection of a random access resource set from the available random access resource sets; and
discarding the second random access resource set, and, in a case that no third random access resource set exists, reselecting, by the terminal, a second BWP different from the first BWP, and re-performing, based on at least one of the terminal capability and a random access resource set configured on the second BWP, at least one of selection of an available random access resource set, selection of a random access resource set from the available random access resource sets, and determination of the random access type,
wherein the third random access resource set is a random access resource set on the first BWP other than the second random access resource set.

29. The apparatus according to any one of claims 19 to 28, wherein the performing, by the execution module according to terminal capability, a random access procedure comprises:
in a case that the determined random access type is 2-step random access, determining, according to at least one of the terminal capability and a fourth random access resource set, whether a preamble group B is available; and
performing, based on the available preamble group B, the random access procedure.

30. The apparatus according to claim 29, wherein the determining, according to at least one of the terminal capability and a fourth random access resource set, a preamble group B comprises at least one of the following:
in a case that random access resources corresponding to the preamble group B exceed the terminal capability, determining that the preamble group B is unavailable; and
in a case that random access resources corresponding to the preamble group B do not exceed the terminal capability and a first condition for selecting the preamble group B is satisfied, determining that the preamble group B is available,
wherein the random access resources corresponding to the preamble group B belong to the fourth random access resource set.

31. The apparatus according to claim 29 or 30, wherein the fourth random access resource set comprises the second random access resource set.

32. The apparatus according to any one of claims 19 to 31, wherein the performing, by the communication module, communication transmission based on a communication link established by the random access procedure comprises:
performing, by the terminal based on the communication link established by the random access procedure, at least one of the following:
transmitting a preamble; and
transmitting data via a physical uplink shared channel PUSCH corresponding to the communication link established by the random access procedure.

33. The apparatus according to any one of claims 19 to 32, wherein the execution module is further configured to perform at least one of the following:
flushing data cached based on a first message, the first message being a message associated with a four-step random access procedure; and
flushing data cached based on a second message, the second message being a message associated with a two-step random access procedure.

34. The apparatus according to any one of claims 19 to 33, wherein the execution module is further configured to:
set initial values of parameters associated with the random access procedure.

35. The apparatus according to any one of claims 19 to 34, wherein the execution module is further configured to:
perform carrier selection.

36. The apparatus according to claim 19, wherein the execution module is further configured to perform at least one of the following:
in a case that the terminal determines that a random access resource set having a first feature is available, determining, by the terminal when selecting a random access resource set based on feature priority, that all features applied to the random access procedure comprise the first feature;
in a case that the terminal determines that a random access resource set having a first feature is available and the network side configures a random access resource set having a second feature, determining, by the terminal when selecting a random access resource set based on feature priority, that the random access resource set having the first feature is a resource of the second feature, and applying feature priority of the second feature to the first feature; and
in a case that the terminal determines that a random access resource set having a first feature is available and the network side does not configure a random access resource set having a second feature, determining, by the terminal when selecting a random access resource set based on feature priority, that the random access resource set having the first feature is a resource of the second feature, and applying feature priority of the first feature to the first feature,
wherein the terminal is an enhanced reduced capability terminal, the first feature is reduced capability, and the second feature is enhanced reduced capability.

37. A terminal, comprising a processor and a memory, the memory storing programs or instructions executable by the processor, and the programs or the instructions, when executed by the processor, implementing steps of the method according to any one of claims 1 to 18.
